# DEMANDE DE BREVET EUROPEEN

(11) **EP 1 044 802 A1**
(43) Date de publication de la demande: **18.10.2000**
(21) Numéro de dépôt: 00400939.5
(22) Date de dépôt: 05.04.2000
(51) Int. Cl.: B32B 21/08, B32B 21/14

(54) **Matériau pour élément de menuiserie, dont cadre, procédé et dispositif de fabrication correspondant**

(30) Priorité: 12.04.1999 FR 9904540
(71) Demandeur: Lapeyre, 93300 Aubervilliers (FR)
(72) Inventeur: Macquart, Philippe, 92600 Asnieres (FR); Magne, Michel, 51530 Moussy (FR)
(74) Mandataire: Le Cam, Stéphane Georges Elie

(57) **Abrégé**

La présente invention concerne un matériau multiplis pour éléments de menuiserie, des cadres de menuiserie qui en sont au moins en partie constitués, un procédé et un dispositif permettant la fabrication de ce matériau.

Le matériau multiplis selon l'invention est constitué d'au moins un pli de bois (7,9), tel qu'au moins un pli de bois (7,9) est lié à au moins un pli de polymère (6,8) avec pénétration du polymère entre les fibres de bois dans une zone de liaison (17,36) s'étendant sur au moins une partie de la surface de contact entre les plis. L'invention concerne également un procédé et un dispositif de fabrication de ce matériau.

Ce matériau multiplis permet de fabriquer toute pièce d'un ensemble menuisé, notamment des cadres de menuiserie.

Les avantages obtenus avec ce matériau ont trait à la fabrication de menuiseries où la face intérieure est en bois et au moins une partie de la face extérieure en polymère.

## Description

L'invention se rapporte au domaine de la menuiserie et concerne plus particulièrement un matériau, utilisable comme élément structurel de menuiserie, constitué de plis de matière assemblés, un procédé de fabrication et un dispositif de fabrication.

De manière générale, les menuiseries extérieures telles que croisées, fenêtres, portes, fermetures ou les menuiseries intérieures telles que portes ou huisseries sont composées d'éléments structurels qui forment le cadre d'un ouvrage assemblé. Ces éléments structurels sont généralement nommés montants et traverses.

Le cadre peut être fixe et constituer une menuiserie tel un montant dormant, un bâti ou une huisserie, ou être mobile et constituer une menuiserie tel un vantail ou un ouvrant.

Les cadres mobiles, souvent dénommés châssis, sont généralement pourvus de panneaux ou d'éléments de vitrage qui permettent d'obturer les surfaces entre les éléments structurels.

Usuellement ces éléments structurels sont en bois ou en polymère.

Le bois, chêne massif, bois exotiques, pins par exemple, est apprécié pour ses qualités esthétiques et sa résistance. Néanmoins il doit être protégé par des écrans protecteurs contre les intempéries (pluie, soleil, gel). Ces revêtements doivent être renouvelés régulièrement ce qui constitue une contrainte et un surcoût dans l'utilisation de ce type de matériau pour menuiserie.

Les éléments structurels en bois sont généralement découpés en une pièce dans des plateaux de bois ou constitués d'un assemblage de plusieurs pièces de bois. Cette dernière technique d'assemblage, connue sous le nom de fabrication de carrelets, est décrite par exemple dans le brevet FR 2 398 156. On peut par cette technique découper les zones défectueuses du bois et obtenir par aboutage des éléments structurels en bois massif de grande qualité et présentant une stabilité améliorée. Cette technique permet d'obtenir de grandes longueurs de bois massif qui sont ensuite découpées à la taille de la menuiserie à réaliser.

Des matériaux polymères sont également utilisés pour fabriquer des menuiseries. Une matière plastique telle que du polychlorure de vinyl (PVC) est généralement utilisée. Ce matériau est apprécié pour sa stabilité à haute et basse température, sa résistance aux chocs et la tenue dans le temps de sa couleur face aux rayonnements solaires.

Les éléments structurels en PVC sont fabriqués usuellement en grande longueur par extrusion et découpés ultérieurement à la taille souhaitée de la menuiserie.

L'invention a pour objet un nouveau matériau, particulièrement adapté à la fabrication d'éléments structurels de menuiserie, qui associe les qualités recherchées dans les menuiseries en bois et celles que confère l'usage d'un polymère. Il permet de réaliser des menuiseries dont la face située à l'intérieur d'un local est en bois et au moins une partie de la face située à l'extérieur est en polymère. Cette disposition permet d'obtenir les avantages procurés par les deux matériaux. En effet la face située à l'intérieur n'est pas affectée par des intempéries et ne reçoit qu'un éclairement modeste : le bois est préservé et ses qualités décoratives peuvent être mises en valeur. La partie en polymère de la face située à l'extérieur présente les qualités requises de résistance tant aux intempéries qu'aux rayonnements.

L'invention propose un matériau multiplis pour éléments de menuiserie, constitué d'au moins un pli de bois, tel qu'au moins un pli de bois est lié à au moins un pli de polymère avec pénétration du polymère entre les fibres du bois dans une ou des zones de liaison s'étendant sur au moins une partie de la surface de contact entre les plis.

De cette manière une liaison intime est assurée entre le bois et le polymère et un matériau continu est obtenu qui peut être façonné pour fabriquer des éléments de menuiserie.

Selon une variante avantageuse, l'invention s'applique à au moins un pli de bois massif.

On entend par « pli de bois massif », un élément en bois d'une épaisseur telle que le pli posé sur sa tranche ne se déforme pas sous son son propre poids. L'épaisseur d'un pli de bois massif est typiquement de l'ordre de quelques millimètres, notamment plus de 5 millimètres.

Selon une réalisation préférée de l'invention, un des plis de bois est constitué d'un assemblage de carrelet.

De cette manière on obtient des éléments de menuiserie avec une partie en bois massif. Cette disposition est particulièrement adaptée pour les bois de chêne.

Selon une variante avantageuse de l'invention, un pli de polymère est constitué de polystyrène ou de polychlorure de vinyl.

Selon une réalisation de l'invention, un pli de bois comporte au moins une cavité dans au moins une zone de liaison. De cette manière, la liaison entre le pli de bois et le pli de polymère est renforcée par la pénétration du polymère dans au moins une partie du volume des cavités. Un ancrage mécanique renforcé est ainsi obtenu entre les plis.

Selon une réalisation préférée de l'invention, un pli de bois comporte une ou des rainures sur sa surface en contact avec un pli de polymère et ces rainures débouchent à l'air libre, sur une face au moins du matériau multiplis. De cette manière, il est possible de favoriser l'évacuation de l'humidité qui peut s'accumuler à l'interface du bois et du polymère. On augmente ainsi l'aération du bois et on diminue très sensiblement les risques de pourrissement du bois.

Selon une réalisation de l'invention, au moins une des rainures, comme précédemment explicitée, est remplie dans une partie de son volume par le polymère, cette partie pouvant former zone de liaison. Il est ainsi possible de combiner dans une même rainure les fonctions d'évacuation de l'humidité et d'ancrage mécanique entre les plis.

Selon une réalisation de l'invention, le matériau est obtenu avec un pli de polymère qui présente des reliefs sur la face à lier au bois. Ces reliefs sont susceptibles de coopérer avec les plis de bois, ou les cavités, ou les rainures pour favoriser la pénétration du polymère dans le bois.

L'invention concerne également un cadre de menuiserie, apte à recevoir au moins un vitrage ou un panneau, dont au moins un élément, notamment un montant ou une traverse est fabriqué à partir du matériau multiplis tel que décrit ci-dessus. De cette manière, il est possible d'obtenir un cadre de menuiserie dont au moins une partie d'une face est en polymère et dont l'autre est constituée de bois.

Selon une variante préférée de l'invention, un ou des matériaux multiplis que comprend le cadre de menuiserie ci-dessus, comporte des rainures entre bois et polymère comme exposé ci-dessus. Les montants ou traverses qui composent le cadre sont agencés de manière à ce que les rainures débouchent à l'air libre et permettent l'évacuation de l'humidité. Ce type de montage peut être obtenu en assemblant, par exemple, un montant et une traverse constitués du matériau multiplis comportant des rainures et l'un de ces deux éléments est muni de lumières traversantes, disposées en regard des rainures de l'autre élément. Il est également possible, par exemple, d'assembler un montant et une traverse constitués chacun d'un élément de matériau multiplis comportant des rainures disposées, pour un élément dans le sens de sa longueur et pour l'autre dans le sens de sa largeur.

L'invention concerne également un procédé de fabrication du matériau multiplis où la liaison entre un pli de bois et un pli de polymère est obtenue par l'échauffement du polymère dans au moins une zone en contact avec le bois et en appliquant une pression suffisante pour faire pénétrer le polymère dans le bois. Tout moyen connu peut être utilisé pour chauffer la face à assembler du polymère. De préférence, on utilisera des techniques de miroirs chauffants positionnés momentanément en regard de la surface à chauffer ou des techniques d'échauffement par transformation d'énergie mécanique en chaleur.

Selon un mode de réalisation préféré, l'échauffement du polymère est obtenu par l'application d'ultrasons ou de vibrations sur l'un des plis. On obtient ainsi un ramollissement du polymère dans les zones excitées par les ultrasons ou les vibrations, à l'interface avec le bois.

L'invention concerne également un dispositif de fabrication du matériau multiplis selon l'invention, comportant un assemblage de plusieurs plis de bois. Ce dispositif comprend des moyens pour assembler par collage sous pression les plis de bois qui coopèrent avec des moyens pour échauffer le polymère de sorte que la liaison bois/polymère s'effectue conjointement à l'assemblage des plis de bois. Il est possible, par exemple, d'encoller pendant une étape les plis de bois auxquels on adjoint un pli de polymère. Les différents plis sont ensuite rapprochés et introduits dans un système de pressage dont un plateau comprend des moyens de transformation d'énergie mécanique en chaleur, par exemple du type sonotrode pour ultrasons ou dispositif de soudure par vibration. Ces derniers permettent l'échauffement du polymère et la pression appliquée permet d'assembler conjointement les plis de bois entre eux et le pli de polymère sur un pli de bois.

D'autres détails et caractéristiques avantageux de l'invention ressortiront ci-après, de la description d'exemples de réalisation de l'invention en référence aux figures annexées qui représentent :
- **figure 1 :** menuiserie dont les éléments de structure sont fabriqués avec le matériau multiplis selon l'invention ;
- **figure 2 :** schéma des plis à assembler selon l'invention ;
- **figure 3 :** variante du schéma des plis à assembler selon l'invention ;
- **figure 4** : coupe verticale du matériau multiplis pendant l'assemblage.

On précise tout d'abord que, par souci de clarté, toutes les figures ne respectent pas rigoureusement les proportions entre les divers éléments représentés.

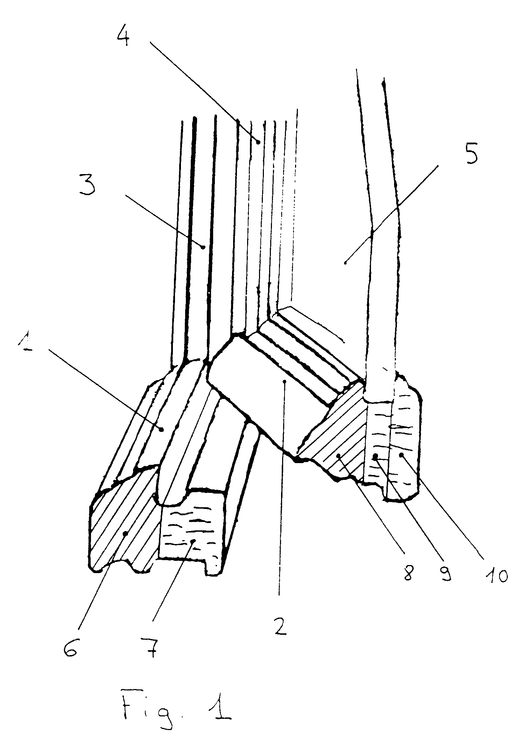

La **figure 1** représente une vue en perspective et coupe partielle d'une menuiserie dont les éléments structurels sont fabriqués avec le matériau multiplis selon l'invention.

Selon cette représentation, la menuiserie est composée d'une partie destinée à être posée et d'une partie mobile. Chaque partie est constituée d'un cadre obtenu par assemblage de traverses (1 pour la partie à poser, 2 pour la partie mobile) et de montants (3 pour la partie à poser, 4 pour la partie mobile). Un vitrage 5 est disposé dans la partie mobile. Les traverses et montants 1, 2, 3, 4 forment les éléments structurels de la menuiserie et sont fabriqués avec le matériau multiplis selon l'invention. La coupe verticale des traverses 1, 2 de la menuiserie fait apparaître la structure du matériau. Un pli de polymère 6, 8, en polystyrène ou PVC par exemple, est situé sur la face externe de la menuiserie et un pli de bois 7, 10 par exemple en chêne, sapin ou bois exotiques, est situé sur sa face interne.

Les plis sont usuellement de forme allongée. Ils sont assemblés entre eux suivant une surface de contact plane ou sensiblement plane et présentent du côté extérieur et du côté intérieur du cadre des reliefs profilés. Ces derniers répondent à des besoins fonctionnels et/ou esthétiques. Au moins un pli de bois 7, 9, 10 peut être composé de plusieurs éléments de bois assemblés, par exemple suivant la technique des carrelets.

Les éléments structurels 1, 2, 3, 4 de la menuiserie peuvent comporter plusieurs plis de bois 9, 10 par exemple assemblés par collage, comme représenté en figure 1, sur la section de la traverse de l'ouvrant. Ce type d'assemblage de plis de bois est usuellement mis en oeuvre sur les lignes d'assemblage de carrelets. Le pli de polymère 6, 8 peut être obtenu à partir d'un profilé extrudé. Ce dernier peut être plein ou creux. Il peut également comporter des alvéoles.

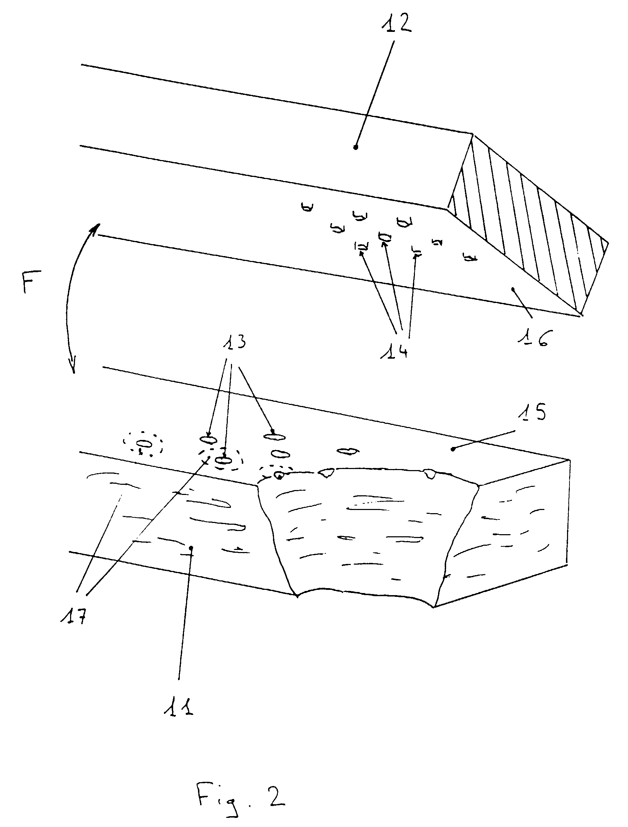

La **figure 2** représente un schéma de plis à assembler pour constituer le matériau multiplis selon l'invention.

Selon cette représentation, un pli de polymère 12 est présenté face à un pli de bois 11. L'assemblage s'effectue par mise en contact des deux surfaces 15, 16 par rapprochement selon la flèche F, et application d'un moyen adapté pour provoquer l'échauffement et la pénétration du polymère entre les fibres du bois à travers la surface de contact.

Cette figure illustre également un moyen de renforcer la liaison mécanique entre le bois et le polymère. Des cavités 13, dont les formes, notamment les contours et la profondeur, ne sont pas limitées, sont créées à la surface 15 du pli de bois 11. Le pli de polymère 12 peut comprendre des reliefs 14 de forme correspondante aux cavités 13 et susceptibles d'être disposés en regard des cavités 13 du pli de bois 11. Pendant l'assemblage ces reliefs 14 pénètrent dans les cavités 13.

Un moyen de chauffage permet de ramollir au moins une partie du polymère. Ce moyen peut être appliqué avant ou pendant le rapprochement des deux plis 11, 12 ou après leur mise en contact suivant les surfaces 15, 16. Après contact et application d'une pression le polymère pénètre entre les fibres de bois pour former des zones de liaison. Les zones de liaison peuvent occuper tout ou partie de la surface de contact obtenue en réunissant les surfaces 15 et 16. Ces zones de liaison peuvent, par exemple, être constituées par la diffusion du polymère dans les parois des cavités et s'étendre dans une zone 17 à la surface 15 du bois qui comprend une cavité et une zone qui la borde.

Il est également possible que des reliefs 14 ne soient pas disposés en regard de cavités 13 et soient disposés pendant l'assemblage sur la surface 15 du bois. On obtient ainsi des zones où la pression locale est supérieure à la pression moyenne appliquée et on peut ainsi favoriser la diffusion du polymère dans les zones du bois en contact avec ces reliefs.

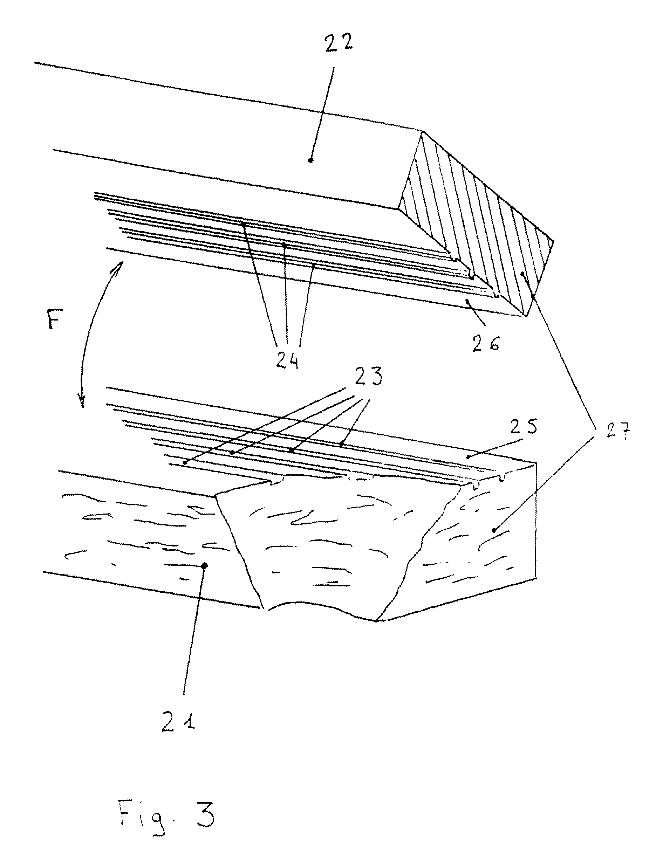

La **figure 3** représente une variante du schéma des plis à assembler pour constituer le matériau multiplis selon l'invention.

Selon cette représentation, des rainures 23 sont découpées dans le pli de bois 21 dans le sens de sa longueur. Une variante consiste à créer dans le bois des rainures débouchant sur la largeur du pli de bois.

Le pli de polymère 22 peut comporter des reliefs 24, aptes ou non à s'insérer dans les rainures 23.

Selon un mode préféré, les reliefs 24 sont des bandes continues de polymère en saillie à la surface 26 du pli de polymère 22 et susceptibles d'être disposées en regard des rainures 23 du bois. Selon un autre mode de réalisation les reliefs sont constitués de plots discontinus qui peuvent pénétrer dans les rainures 23 du bois.

De préférence, la forme et la dimension des reliefs 24 sont tels que le polymère qui les constitue n'occupe pas tout le volume de la rainure 23 et un canal continu est obtenu au fond des rainures après assemblage sur toute la longueur et/ou la largeur du bois.

On obtient ainsi un moyen permettant d'évacuer par une face située à au moins une extrémité 27 du matériau multiplis, l'humidité qui peut être retenue par le pli de polymère et faciliter ainsi la respiration du bois. Les risques de pourrissement du bois sont alors sensiblement diminués.

Les plis de bois et polymère assemblés suivant les figures 2 et 3 sont représentés avec une forme parallélépipèdique. Le matériau obtenu se prête à un usinage pour façonner un élément de menuiserie tel que 1, 2, 3, 4 représenté sur la figure 1. En variante, un ou plusieurs plis sont façonnés avant leur assemblage (notamment par l'extrusion du polymère ou usinage du bois) de sorte que la fabrication des éléments de menuiserie se fait sans usinage ou avec usinage partiel du matériau multiplis.

L'assemblage, notamment sous forme de cadre, d'éléments structurels tels que 1, 2, 3, 4 fabriqués avec un matériau multiplis selon l'invention présentant des rainures comme représenté à la fig. 3 peut être effectué de manière à ce que les rainures 23 débouchent à l'air libre, une fois le cadre assemblé.

Pour former le cadre, on réunit, par exemple à angle droit, les éléments structurels de manière à ce que le pli de polymère soit situé vers l'extérieur et le pli de bois vers l'intérieur. L'assemblage des éléments peut s'effectuer de manière à ce qu'une face située à une extrémité 27 de l'un des éléments soit en contact avec une face perpendiculaire à la surface d'assemblage du bois et du polymère de l'autre élément, correspondant à sa grande longueur. L'assemblage peut également s'effectuer en rapprochant des éléments structurels dont les extrémités ont été découpées suivant des coupes biaises.

Cet assemblage peut être mécanique ou obtenu par collage. On veille alors à ce que les rainures ne soient pas obturées. Des lumières peuvent, par exemple, être percées dans un élément en regard de rainures présentes dans l'autre élément à assembler afin d'assurer une circulation entre les canaux du matériau multiplis, les lumières et l'air libre.

Un autre mode de réalisation consiste à assembler deux éléments dont les rainures ont été découpées dans un sens différent, par exemple dans le sens de la longueur de l'élément pour l'un et dans le sens de la largeur pour l'autre. On assemble les éléments de manière à ce que les rainures effectuées dans la longueur soient en regard avec celles effectuées dans la largeur. Ces dernières sont disposées de manière à ce qu'elles débouchent à l'air libre sur au moins une face du cadre, après assemblage.

En outre ces rainures 23 peuvent jouer un rôle d'accrochage mécanique de même que les cavités 13 décrites en figure 2. Le rôle d'accrochage peut être obtenu même si le polymère n'occupe pas tout le volume des rainures 23. Il est également possible d'associer les deux modes de renfort mécanique en créant des cavités et des rainures à la surface du pli de bois.

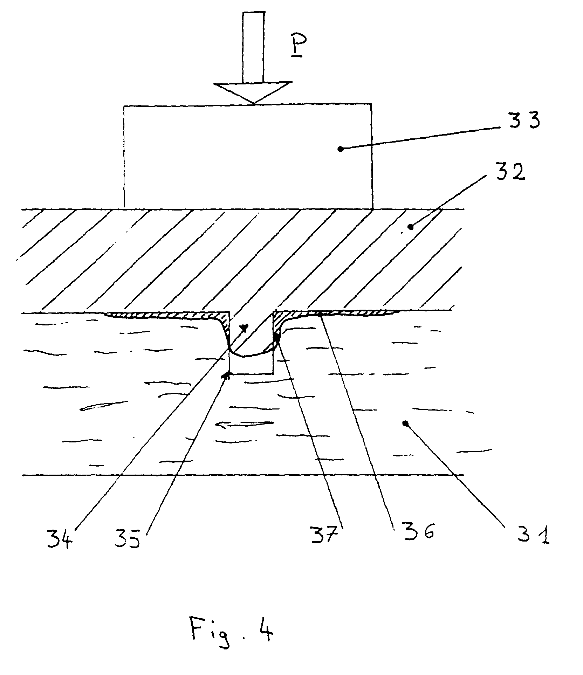

La **figure 4** représente une coupe verticale du matériau multiplis au moment de l'assemblage de deux plis entre eux et illustre plus particulièrement la zone de liaison.

Selon cette représentation, un pli de bois 31 est maintenu en contact avec un pli de polymère 32. Une pression, P, est appliquée entre les deux plis. Le pli de polymère est ramolli de manière à ce qu'une partie de ce matériau diffuse entre les fibres du bois dans une zone de liaison 36. Ce ramollissement peut être obtenu par la conversion d'énergie mécanique en chaleur à l'aide d'un système vibratoire 33. La zone de liaison s'étend sensiblement sur la surface exposée au moyen d'échauffement 33. Dans le cas où des cavités ou des rainures 35 ont été créées à la surface du bois, le polymère peut pénétrer dans une partie au moins du volume correspondant. Le polymère peut pénétrer dans le bois autour des parois de ces cavités ou rainures dans une zone 37 qui fait alors partie de la zone de liaison 36.

On choisira de préférence une sonotrode 33 pour soudure par ultrasons quand on désire obtenir des liaisons ponctuelles entre le bois et le polymère. Ce cas correspond, par exemple, au schéma de la figure 2 où des plots de polymère 14 peuvent être insérés dans des cavités 13 du bois et où un exemple de zones de liaison ponctuelle 17 est illustré.

Il est également possible d'effectuer des soudures par ultrason qui créent des zones de liaison ponctuelle pour assembler un pli de polymère comportant des plots 14 ou des bandes 24 avec un pli de bois comportant des rainures 23.

L'application d'une sonotrode pour créer une zone de liaison ponctuelle s'effectue usuellement dans une gamme de fréquence de 20 à 40 KHz, pendant des temps de maintien qui varient par exemple de 0,2 à 10 secondes.

Il est possible de combiner plusieurs sonotrodes pour obtenir un outil multitêtes qui permet de souder plusieurs points en même temps. La soudure d'un pli de polymère avec un pli de bois peut s'effectuer alors de manière semi-continue :

les plis à assembler sont positionnés de manière à ce que les zones de liaison à créer soient en regard avec les têtes de sonotrode. Celles-ci sont appliquées sur un pli pour échauffer le polymère en plusieurs points et former la liaison. Les plis sont ensuite déplacés de manière à ce qu'une autre partie à assembler soit disposée en regard des têtes de sonotrode. Une variante consiste à disposer un ensemble de têtes sur toute la surface des plis à assembler afin de réaliser l'opération de soudure en une seule étape.

On préférera un système de soudure par vibration 33 si on souhaite que les zones de liaison couvrent de plus grandes surfaces. Cette technique s'adapte particulièrement au cas envisagé dans le schéma de la figure 3 notamment, où l'on souhaite lier un pli de polymère, qui peut comporter des reliefs tels que des bandes continues, avec un pli de bois dans lequel des rainures ont été découpées.

L'application d'un outil pour soudure par vibration conduit à des déplacements relatifs, généralement d'une amplitude de l'ordre de 0,5 à 2 mm, des deux matériaux en contact à assembler. La fréquence usuellement utilisée se situe dans la gamme de 100 à 500 HZ. Le frottement des deux matériaux conduit à un échauffement du polymère qui ramollit et une pression, par exemple, de l'ordre de 0,5 à 10 N/mm², permet de le faire pénétrer dans le bois. Les zones excitées par les vibrations sont généralement assez grandes pour que les plis soient liés sur leur largeur au cours d'une opération de soudure élémentaire. Pour créer les liaisons sur la longueur des plis à assembler, on peut, comme précédemment soit déplacer les plis et créer successivement des zones de liaison, soit disposer un ensemble d'outils pour soudure par vibration sur la longueur des plis. Les zones de liaison ainsi formées peuvent être soit continues sur l'ensemble de la surface de contact entre pli de bois et pli de polymère, soit discontinues et n'en occuper qu'une partie de la surface.

La **figure 4** illustre également la pénétration du polymère dans un creux du bois 35. Le creux 35 peut correspondre aussi bien à la coupe d'une cavité 13 selon la figure 2 qu'à celle d'une rainure 23 selon la figure 3. Un relief 34 du pli de polymère peut être introduit dans l'espace creux du bois. Ce relief peut être excité mécaniquement par le système vibratoire et une partie du polymère diffuse dans une zone 37, autour des parois des cavités ou des rainures du bois.

Des variantes du creux 35 peuvent correspondre à plusieurs formes de découpe du bois. Il est possible de réaliser, par exemple, une coupe biaise, une découpe en sifflet ou une découpe en queue d'arronde dans le bois. Ces différentes formes de découpe peuvent être choisies pour améliorer l'accrochage mécanique entre le bois et le polymère : en effet, la géométrie de ces découpes peut permettre d'obtenir un encastrement du polymère dans le bois, rendant ainsi plus difficile l'arrachement des deux plis.

L'invention ne se limite pas à ces types particuliers de réalisation et doit être interprétée de façon non limitative et englobant tout type de matériau multiplis constitué d'au moins un pli de bois et d'un pli de polymère liés par pénétration du polymère entre les fibres du bois sur au moins une partie de la surface entre les plis, ainsi que tout cadre de menuiserie ou toute pièce d'un ensemble menuisé dont seuls certains éléments de menuiserie sont constitués au moins en partie de ce matériau multiplis.

## Revendications

1. Matériau multiplis pour éléments de menuiserie constitué d'au moins un pli de bois (7, 9), **caractérisé en ce qu'**au moins un pli de bois soit (7, 9) est lié à au moins un pli de polymère (6,8) avec pénétration du polymère entre les fibres du bois dans une ou des zones de liaison (17,36) s'étendant sur au moins une partie de la surface de contact entre les plis.

2. Matériau multiplis selon la revendication 1, **caractérisé en ce qu'**un des plis de bois (7, 9) est un assemblage de carrelets.

3. Matériau multiplis selon la revendication 1 ou la revendication 2, **caractérisé en ce qu'**un pli de polymère (6, 8) est constitué de polystyrène ou de polychlorure de vynil.

4. Matériau multiplis selon l'une quelconque des revendications 1 à 3, **caractérisé en ce qu'**un pli de bois (11, 31), comporte au moins une cavité (13, 35) dans au moins une zone de liaison (17, 36) **et en ce que** le polymère pénètre dans au moins une partie du volume des cavités (13, 35).

5. Matériau multiplis selon l'une des revendications 1 à 4, **caractérisé en ce qu'**un pli de bois comporte une ou des rainures (23) sur sa surface (25) en contact avec un pli de polymère **et en ce que** ces rainures débouchent à l'air libre, au moins sur une face (27) du matériau multiplis.

6. Matériau multiplis selon la revendication 5, **caractérisé en ce que** le polymère pénètre dans une partie de l'espace d'au moins une des rainures (23).

7. Matériau multiplis selon l'une quelconque des revendications 1 à 6, **caractérisé en ce qu'**il est obtenu avec un pli de polymère qui présente des reliefs (14, 24, 34) sur la face (16, 26) à lier au bois.

8. Cadre de menuiserie apte à recevoir au moins un vitrage ou un panneau, **caractérisé en ce** qu'au moins un élément, notamment un montant (3, 4) ou une traverse (1, 2) du cadre est fabriqué à partir du matériau multiplis suivant l'une des revendications 1 à 7.

9. Cadre de menuiserie selon la revendication 8, **caractérisé en ce que** le ou les matériaux multiplis présentent des rainures (23) selon la revendication 5 ou 6 et que les montants (3, 4) ou traverses (1, 2) sont agencés de manière que les rainures (23) débouchent à l'air libre et permettent l'évacuation de l'humidité.

10. Procédé de fabrication de matériau multiplis selon l'une des revendications 1 à 7, **caractérisé en ce que** la liaison entre un pli de bois (11, 21, 31) et un pli de polymère (12, 22, 32) est obtenue par l'échauffement du polymère dans au moins une zone en contact avec le bois (17,36) et en appliquant une pression (P) suffisante pour faire pénétrer le polymère dans le bois.

11. Procédé de fabrication selon la revendication 10, **caractérisé en ce que** l'échauffement du polymère est obtenu par l'application d'ultrasons ou de vibrations sur l'un des plis.

12. Dispositif pour la fabrication de matériaux multiplis selon la revendication 10 ou 11, le matériau comportant un assemblage de plusieurs plis de bois, **caractérisé en ce qu'**il comprend des moyens pour assembler par collage sous pression les plis de bois qui coopèrent avec des moyens pour échauffer le polymère de sorte que la liaison bois/polymère s'effectue conjointement à l'assemblage des plis de bois.
